# FASCICULE DE BREVET EUROPEEN

(11) **EP 3 261 874 B1**
(45) Date de publication et mention de la délivrance du brevet: **11.12.2019**
(21) Numéro de dépôt: 16707920.1
(22) Date de dépôt: 16.02.2016
(51) Int. Cl.: B60L 3/00, B60L 3/04

(54) **BOITIER CAPACITIF ET CARTER POUR GROUPE MOTOPROPULSEUR ELECTRIQUE**
KONDENSATOR GEHÄUSE UND KASTEN EINES ELEKTRISCHEN ANTRIEBSAGGREGATS
CAPACITOR HOUSING AND BOX FOR ELECTRIC DRIVE UNIT

(30) Priorité: 23.02.2015 FR 1551518
(43) Date de publication de la demande: 03.01.2018
(73) Titulaire: Renault S.A.S., 92100 Boulogne-Billancourt (FR)
(72) Inventeur: FRANCO, Christophe, 92500 Rueil Malmaison (FR); TEXIER, Roselyne, 91200 Athis-Mons (FR)
(86) Numéro de dépôt international: PCT/FR2016/050347
(87) Numéro de publication internationale: WO 2016/135393

(56) Documents cités:
- FR-A1- 2 988 901
- US-A- 5 882 213
- US-A1- 2014 319 909

## Description

La présente invention se rapporte de manière générale au domaine de l'électrotechnique et concerne plus précisément un groupe motopropulseur pour véhicule électrique ou hybride et un boîtier capacitif pour un tel groupe motopropulseur.

Les groupes motopropulseurs électriques pour voitures à traction/propulsion au moins partiellement électrique comprennent un nombre important de composants, en plus du moteur électrique et de la batterie de traction. Ces composants comprennent l'onduleur de traction, mais également une boîte à fusibles et des modules capacitifs, ainsi que des dispositifs de refroidissement et de connexions. L'encombrement de ce type de groupe motopropulseur est donc difficile à diminuer, ce qui entraîne notamment une maintenance difficile et des contraintes sur l'architecture du véhicule. Un tel groupe motopropulseur est décrit notamment dans le brevet US8820467.

Il est à noter qu'on appelle dans cette demande « batterie de traction » une batterie délivrant une tension de l'ordre de plusieurs centaines de volts, adaptée à alimenter un onduleur de moteur électrique apte à transmettre un couple aux roues d'un véhicule, par opposition aux batteries de servitude délivrant une tension de 14V (volts) environ. L'invention n'est donc pas limitée aux véhicules fonctionnant seulement en traction mais s'applique aussi aux véhicules fonctionnant en propulsion.

Les groupes motopropulseurs électriques nécessitent de plus un accès sécurisé aux fusibles présents sur le réseau alimenté par la batterie de traction avant une intervention, dit réseau « haute tension ». Or il est difficile de concilier facilité d'accès et faible encombrement. De plus en cas de choc frontal par exemple, si un groupe motopropulseur électrique a été endommagé, notamment au niveau des connexions reliant les composants du groupe motopropulseur entre eux, une vérification d'absence de tension au niveau du boîtier à fusibles ne garantira pas forcément l'absence de tension en amont du boîtier. C'est pourquoi la demande de brevet WO201495394 propose de mettre un boîtier à fusibles au plus près de la batterie de traction, sous le véhicule. Cependant un tel positionnement ne rend pas l'accès au boîtier à fusibles très aisé.

Le document US20140319909 décrit un boîtier intégrant une capacité de lissage d'un groupe motopropulseur, ce boîtier comportant des bornes de sortie connectées à l'onduleur du groupe motopropulseur, et d'autres bornes de sortie connectées à des fusibles, au compresseur et au système de chauffage.

Le document US5882213 décrit un boîtier de jonction compact, intégré à une batterie 14V, comportant un lien fusible entre la batterie et le starter et l'alternateur, ainsi qu'un orifice pourvu d'un couvercle sécurisant l'accès à une borne de la batterie.

Le document FR 2 988 901 A1 divulgue un boîtier électronique pour un groupe motopropulseur électrique comprenant un circuit électrique de vérification d'absence de tension électrique, ledit circuit électrique comprenant une fiche et une embase d'ouverture/ fermeture dudit circuit électrique, où la position de la fiche indique l'état du circuit. Un des buts de l'invention est de remédier à au moins une partie des inconvénients de la technique antérieure en fournissant un boîtier capacitif pour groupe motopropulseur intégrant les fusibles du réseau alimenté par la batterie de traction, ainsi qu'un carter d'électronique de puissance et un groupe motopropulseur intégrants un tel boîtier.

A cette fin, l'invention propose un carter électronique comprenant un boîtier capacitif selon la revendication 1. L'invention propose donc d'une part un boîtier intégrant une capacité de lissage d'un groupe motopropulseur électrique, ladite capacité étant disposée entre un bus négatif et un bus positif internes audit boîtier, ledit boîtier comportant :
- une première borne de sortie positive connectée d'une part audit bus interne positif et apte à être connectée d'autre part à une première entrée d'un onduleur dudit groupe motopropulseur, et une première borne de sortie négative connectée d'une part audit bus interne négatif et apte à être connectée d'autre part à une deuxième entrée dudit onduleur,
- une deuxième borne de sortie positive connectée audit bus interne positif et une deuxième borne de sortie négative connectée audit bus interne négatif, ledit boîtier étant caractérisé en ce qu'il comporte en outre :
   - deux pattes de fixation de connexion électrique, lesdites pattes étant isolées desdits bus internes positif et négatif,
   - un fusible dont une des bornes électriques est fixée à ladite deuxième borne positive et dont l'autre des bornes électriques est fixée à l'une desdites pattes de fixation,
   - et un autre fusible dont une des bornes électriques est fixée à ladite deuxième borne négative et dont l'autre des bornes électriques est fixée à l'autre desdites pattes de fixation.

Grâce à l'invention, on évite l'utilisation d'un boîtier dédié aux fusibles dans le groupe motopropulseur, ce qui diminue son encombrement et son coût, et on économise des connexions électriques pouvant être longues entre les fusibles et le composant du groupe motopropulseur auquel ils sont rattachés. Cela permet de diminuer les risques de coupure de ces connexions en cas de choc.

L'invention exploite, pour la diminution de ces connexions électriques, la présence de barres bus internes à la capacité de lissage, qui par quelques modifications simples peut donc fournir plusieurs points de connexion électriques à l'architecture électrique du groupe motopropulseur.

On appelle ici barre bus un conducteur électrique rigide destiné à être parcouru par des courants de forte intensité. Il se présente généralement comme une bande de section rectangulaire, par exemple en cuivre ou en aluminium, connectée à chacune de ses extrémités à un module électronique de puissance tel qu'un module onduleur ou un module capacitif.

Selon une caractéristique avantageuse du boîtier selon l'invention, lesdites bornes électriques desdits fusibles fixées auxdites pattes de fixation sont reliées électriquement au réseau haute tension du véhicule comportant ledit groupe motopropulseur. Ainsi les pattes de fixation fournissent une connexion au réseau haute tension du véhicule, sans nécessiter de points de connexion additionnels.

Avantageusement, lesdits fusibles sont connectés électriquement audites bornes et auxdites pattes par un système de vis-écrou. Cette connexion simple permet un montage aisé de nouvelles connexions sur le réseau haute tension du véhicule implémentant l'invention. Il permet par ailleurs un changement aisé des fusibles lors d'opérations de réparation.

Avantageusement, ledit boîtier comporte en outre une troisième borne positive connectée d'une part audit bus interne positif et apte à être connectée d'autre part à une première entrée d'un autre onduleur dudit groupe motopropulseur, et une troisième borne négative connectée d'une part audit bus interne négatif et apte à être connectée d'autre part à une deuxième entrée dudit autre onduleur.

Ainsi le boîtier capacitif selon l'invention permet une connexion de la batterie à deux onduleurs, pour alimenter par exemple deux moteurs électriques de traction.

L'invention propose d'autre part un carter étanche d'électronique de puissance dans lequel est inséré le boîtier selon l'invention,
- ledit carter comportant des bornes de sorties déportées correspondant auxdites bornes de sortie positives et négatives dudit boîtier,
- ledit boîtier comportant une patte de sortie positive connectée audit bus interne positif et une patte de sortie négative connectée audit bus interne négatif,
- et ledit carter étanche comportant deux orifices situés respectivement en regard desdites pattes de sortie positive et négative ainsi qu'un couvercle de protection desdits orifices, ledit couvercle étant muni d'un joint d'étanchéité.

L'étanchéité du carter comportant le boîtier capacitif permet une protection des éléments qu'il renferme contre l'eau et les poussières notamment. Le carter permet une plus grande résistance du boîtier capacitif en cas de choc, et ses orifices permettent d'effectuer une vérification d'absence de tension au niveau des pattes de sortie du boîtier capacitif. La possibilité d'effectuer une telle vérification d'absence de tension au niveau du boîtier capacitif permet de limiter les risques d'électrocution dus à une coupure de connexions en amont.

Lesdits orifices sont adaptés à l'introduction d'une sonde de vérification d'absence de tension, et ledit couvercle protège un troisième orifice ménagé dans ledit carter en regard d'un dispositif de sécurité électrique. Ledit dispositif de sécurité électrique est apte à provoquer la décharge rapide de ladite capacité de lissage à l'ouverture dudit couvercle.

L'utilisation du carter selon l'invention nécessite le déport des bornes de sortie du boîtier capacitif au niveau du carter lui-même. Préférentiellement le déport desdites bornes de sortie positives et négatives dudit boîtier au niveau dudit carter est réalisé à partir de barres bus ou de câbles.

Avantageusement, ledit carter comporte une résistance de décharge connectée entre une desdites bornes de sortie positive et une desdites bornes de sortie négative dudit boîtier. Cette résistance de décharge assure une décharge lente automatique de la capacité de lissage en quelques minutes sans intervention du dispositif de sécurité, ce qui peut être utile en cas de défaut de celui-ci, dû par exemple à un choc du véhicule.

Cette résistance de décharge permet de décharger la capacité de lissage avant intervention sur l'onduleur par exemple.

L'invention concerne encore un groupe motopropulseur intégrant ledit boîtier et ledit carter selon l'invention, ledit groupe motopropulseur comportant une batterie de traction, une machine électrique et un ou plusieurs onduleurs.

D'autres caractéristiques et avantages apparaîtront à la lecture d'un mode de réalisation préféré décrit en référence aux figures dans lesquelles :
- la figure 1 représente un boîtier capacitif d'un groupe motopropulseur selon l'invention,
- la figure 2 représente l'intérieur d'un carter intégrant une variante de boîtier capacitif d'un groupe motopropulseur selon l'invention,
- et la figure 3 représente un dispositif d'accès dans ledit carter pour une vérification d'absence de tension, selon l'invention.

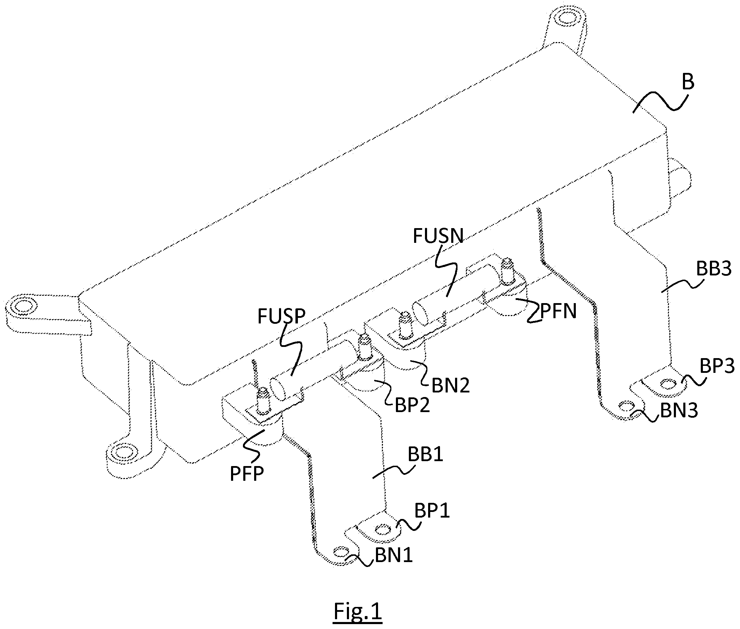

Selon un mode de réalisation préféré de l'invention représenté à la **figure 1****,** une capacité de lissage d'un groupe motopropulseur électrique d'un véhicule électrique est intégrée dans un boîtier capacitif B. Ce groupe motopropulseur comporte une batterie de traction alimentant deux machines électriques de traction à l'aide de deux onduleurs. Le boîtier capacitif B se trouve en sortie de la batterie de traction, entre le bus positif et le bus négatif qui alimentent les deux onduleurs.

Le boîtier capacitif B comporte, dans ce mode de réalisation préféré :
- une première borne de sortie positive BP1 destinée à être connectée à une première entrée d'un onduleur du groupe motopropulseur, et une première borne de sortie négative BN1 destinée à être connectée à une deuxième entrée de cet onduleur,
- une deuxième borne de sortie positive BP2 et une deuxième borne de sortie négative BN2,
- une troisième borne de sortie positive BP3 destinée à être connectée à une première entrée d'un deuxième onduleur du groupe motopropulseur, et une troisième borne de sortie négative BN3 destinée à être connectée à une deuxième entrée de ce deuxième onduleur.

Selon l'invention, les deuxièmes bornes positive BP2 et négative BN2 servent à fixer et à connecter électriquement deux fusibles du réseau haute tension du véhicule, alimenté par la batterie de traction du groupe motopropulseur. Pour cela, le boîtier B comporte deux pattes de fixation PFP et PFN isolées électriquement de la capacité de lissage. Un premier fusible FUSP est fixé sur le bus positif du réseau haute tension entre la borne positive BP2 et la patte de fixation PFP. Un deuxième fusible FUSN est fixé sur le bus négatif du réseau haute tension entre la borne négative BN2 et la patte de fixation PFN. Ces fixations s'effectuent par un système de vis-écrou au niveau d'orifices filetés présents sur les bornes positive BP2 et négative BN2. Les vis des pattes de fixation PFP et PFN servent à relier électriquement les fusibles au réseau haute tension du véhicule, alimenté par la batterie de traction, elle-même protégée par des relais, c'est-à-dire par des interrupteurs de puissance connectés aux bornes plus et moins de la batterie de traction.

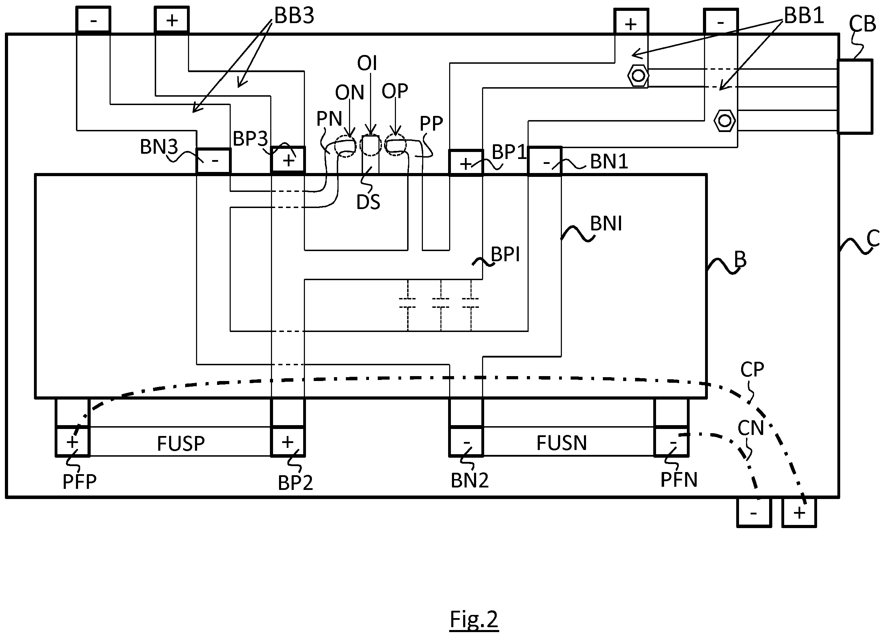

Afin de protéger le boîtier capacitif B et les fusibles FUSP et FUSN, une variante de réalisation de l'invention consiste à intégrer ce boîtier capacitif B dans un carter C étanche d'électronique de puissance, représenté sur la **figure 2****.** Dans cette variante de réalisation de l'invention, les bornes de sortie du boîtier B destinées à être connectées aux onduleurs du groupe motopropulseur sont situées sur une face opposée du boîtier à celle qui supporte les fusibles FUSN et FUSP.

On distingue également sur cette **figure 2** en coupe, les bus internes positif BPI et négatif BNI entre lesquels est disposée la capacité de lissage. Les bornes de sortie positives du boîtier B sont toutes connectées au bus interne positif BPI tandis que les bornes de sortie négatives du boîtier B sont toutes connectées au bus interne BNI.

Des barres bus BB1 servent à déporter les premières bornes de sortie BP1 et BN1 du boîtier B vers des bornes de sortie correspondantes du carter C, tandis que des barres bus BB3 servent à déporter les troisièmes bornes de sortie BP3 et BN3 du boîtier B vers des bornes de sortie correspondantes du carter C. Il est à noter que les barres bus BB1 et BB3 comportent chacun un barre bus positif et un barre bus positif isolés l'un de l'autre. Une dérivation des barres bus BB1 relie ceux-ci électriquement à un connecteur CB de sortie destiné à être connecté à la batterie de traction du véhicule. De plus il est à noter que les bornes de sortie déportées au niveau du carter C sont isolées électriquement du reste du carter C. En effet les parois du carter C sont reliées à la masse du véhicule, c'est-à-dire à son châssis, et doivent donc être isolées électriquement de la capacité de lissage.

De manière similaire, un câble électrique CP sert à connecter la borne électrique du fusible FUSP fixée à la patte de fixation PFP, à une borne de sortie correspondante du carter C, tandis qu'un câble électrique CN sert à connecter la borne électrique du fusible FUSN fixée à la patte de fixation PFN, à une borne de sortie correspondante du carter C.

De plus, dans cette variante de réalisation de l'invention, le bus positif interne BPI présente une patte de sortie positive PP en sortie du boîtier B, et le bus négatif interne BNI présente une patte de sortie négative PN en sortie du boîtier B, les pattes de sortie PP et PN étant peu éloignées l'une de l'autre. Par exemple elles sont distantes de l'ordre de 1 à 3 centimètres l'une de l'autre. Entre ces deux pattes se trouve un dispositif de sécurité électrique DS encore appelé « interlock », fixé au boîtier B.

Le carter C comporte des orifices ON, OI et OP respectivement en regard de la patte de sortie négative PN, du dispositif de sécurité DS et de la patte de sortie positive PP.

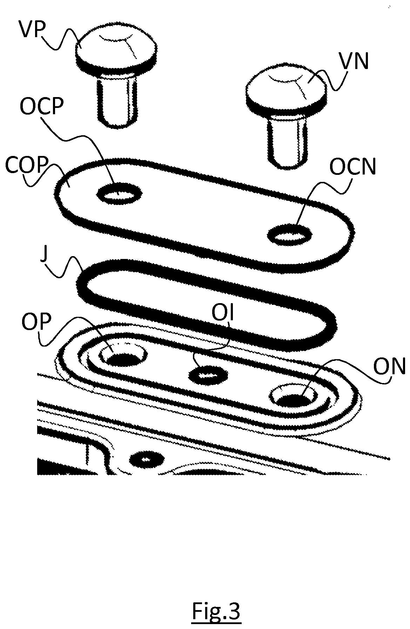

Ces orifices sont protégés par un couvercle COP muni d'un joint d'étanchéité J, représenté sur la **figure 3****.** Le couvercle COP du carter étanche C comporte des orifices OCP et OCN superposables respectivement aux orifices OP et ON. Ces orifices OCP et OCN permettent de fixer le couvercle COP sur le reste du carter C à l'aide de plots ou vis respectifs VP et VN rendus étanches. Ils permettent un accès aux pattes de sortie PP et PN pour y effectuer une vérification d'absence de tension.

Il est à noter que pour effectuer une vérification d'absence de tension, il est nécessaire de pouvoir accéder aux connexions électriques à vérifier par l'intermédiaire d'un outil de vérification d'absence de tension. Cet outil utilise des sondes plus fines que des doigts humains. La norme imposant qu'un opérateur ne puisse accéder par ses doigts à ces connexions électriques, les orifices OP, OI et ON doivent être assez fins pour qu'un opérateur ne puisse y passer ses doigts.

Le dispositif de sécurité électrique DS est apte à avertir un dispositif de gestion du système de charge du véhicule, de l'ouverture du couvercle COP. Ce dispositif de gestion commande alors la décharge active, en quelques secondes, de la capacité de lissage. Cette commande fait intervenir l'onduleur de traction qui dissipe l'énergie contenue dans la capacité de lissage dans les bobinages statoriques du véhicule.

La présence d'un accès pour une vérification d'absence de tension au niveau de la capacité de lissage présente l'avantage d'une meilleure sécurité par rapport à une vérification d'absence de tension au niveau d'un boîtier fusible déporté. En effet une rupture connexion entre le boîtier et la capacité de lissage est susceptible d'entraîner un mauvais diagnostic et donc un choc électrique pour un opérateur.

Dans une autre variante de réalisation non représentée, une résistance de décharge dans le carter C permet de décharger la capacité de lissage. Cette résistance de décharge est par exemple connectée en une de ses extrémités à une des bornes de sortie négative BN1 ou BN3 du boîtier capacitif B, l'autre de ses extrémités étant connectée à une borne de sortie positive BP1 ou BP3 correspondante du boîtier B.

Il est à noter que d'autres variantes de réalisation de l'invention sont envisageables, par exemple en variante le boîtier capacitif selon l'invention n'a qu'une borne de sortie positive et qu'une borne de sortie négative destinées à être connectées à un onduleur, dans le cas où le groupe motopropulseur ne fonctionne qu'avec un seul onduleur de traction. Dans d'autres variantes, les bornes de sortie du boîtier B sont disposées différemment.

## Revendications

1. Carter (C) étanche d'électronique de puissance dans lequel est inséré un boîtier (B), ledit boîtier (B) intégrant une capacité de lissage d'un groupe motopropulseur électrique, ladite capacité étant disposée entre un bus négatif et un bus positif internes (BPI, BNI) audit boîtier (B), ledit boîtier (B) comportant
- une première borne de sortie positive (BP1) connectée d'une part audit bus interne positif (BPI) et apte à être connectée d'autre part à une première entrée d'un onduleur dudit groupe motopropulseur, et une première borne de sortie négative (BN1) connectée d'une part audit bus interne négatif (BNI) et apte à être connectée d'autre part à une deuxième entrée dudit onduleur,
- une deuxième borne de sortie positive (BP2) connectée audit bus interne positif (BPI) et une deuxième borne de sortie négative (BN2) connectée audit bus interne négatif (BNI), ledit boîtier (B) comportant en outre :
- deux pattes de fixation (PFP, PFN) de connexion électrique, lesdites pattes étant isolées desdits bus internes positif et négatif (BPI, BNI),
- un fusible (FUSP) dont une des bornes électriques est fixée à ladite deuxième borne positive (BP2) et dont l'autre des bornes électriques est fixée à l'une desdites pattes de fixation (PFP),
- et un autre fusible (FUSN) dont une des bornes électriques est fixée à ladite deuxième borne négative (BN2) et dont l'autre des bornes électriques est fixée à l'autre desdites pattes de fixation (PFN),
ledit carter (C) comportant des bornes de sorties déportées correspondant auxdites bornes de sortie positives et négatives (BP1, BP2, BP3, BN1, BN2, BN3) dudit boîtier (B), ledit boîtier (B) comportant une patte de sortie positive (PP) connectée audit bus interne positif (BPI) et une patte de sortie négative (PN) connectée audit bus interne négatif (BNI), et ledit carter (C) étanche comportant deux orifices (OP, ON) situés respectivement en regard desdites pattes de sortie positive (PP) et négative (PN) ainsi qu'un couvercle de protection (COP) desdits orifices (OP, ON), ledit couvercle (COP) étant muni d'un joint d'étanchéité (J),
lesdits orifices (OP, ON) étant adaptés à l'introduction d'une sonde de vérification d'absence de tension, et ledit couvercle (COP) protégeant un troisième orifice (OI) ménagé dans ledit carter (C) en regard d'un dispositif de sécurité électrique (DS).

2. Carter (C) selon la revendication 1, **caractérisé en ce que** lesdits fusibles (FUSP, FUSN) sont connectés électriquement audites bornes (BP2, BN2) et auxdites pattes (PFP, PFN) par un système de vis-écrou.

3. Carter (C) selon la revendication 1 ou 2, **caractérisé en ce que** ledit boîtier (B) comporte en outre une troisième borne positive (BP3) connectée d'une part audit bus interne positif (BPI) et apte à être connectée d'autre part à une première entrée d'un autre onduleur dudit groupe motopropulseur, et une troisième borne négative (BN3) connectée d'une part audit bus interne négatif (BNI) et apte à être connectée d'autre part à une deuxième entrée dudit autre onduleur.

4. Carter (C) selon l'une quelconque des revendications 1 à 3, **caractérisé en ce que** ledit dispositif de sécurité électrique (DS) est apte à provoquer la décharge rapide de ladite capacité de lissage à l'ouverture dudit couvercle (COP).

5. Carter (C) selon l'une quelconque des revendications 1 à 4, **caractérisé en ce que** le déport desdites bornes de sortie positives et négatives (BP1, BP2, BP3, BN1, BN2, BN3) dudit boîtier (B) au niveau dudit carter (C) est réalisé à partir de barres bus (BB1, BB3) ou de câbles.

6. Carter (C) selon l'une quelconque des revendications 1 à 5, **caractérisé en ce que** ledit carter (C) comporte une résistance de décharge connectée entre une desdites bornes de sortie positive et une desdites bornes de sortie négative dudit boîtier (B).

7. Groupe motopropulseur comportant un carter (C) selon l'une quelconque des revendications 1 à 6, une batterie de traction, une machine électrique et un ou plusieurs onduleurs, **caractérisé en ce que** lesdites bornes électriques desdits fusibles (FUSP, FUSN) fixées auxdites pattes de fixation (PFP, PFN) sont reliées électriquement au réseau haute tension du véhicule comportant ledit groupe motopropulseur.

## Patentansprüche

1. Dichtes Leistungselektronikgehäuse (C), in das ein Kasten (B) eingefügt ist, wobei der Kasten (B) einen Glättungskondensator eines elektrischen Antriebsstrangs aufnimmt, wobei der Kondensator zwischen einer internen Minusschiene und einer internen Plusschiene (BPI, BNI) des Kastens (B) angeordnet ist, wobei der Kasten (B) Folgendes umfasst:
- einen ersten positiven Ausgangsanschluss (BP1), der einerseits mit der internen Plusschiene (BPI) verbunden ist und fähig ist, andererseits mit einem ersten Eingang eines Wechselrichters des Antriebsstrangs verbunden zu werden, und einen ersten negativen Ausgangsanschluss (BN1), der einerseits mit der internen Minusschiene (BNI) verbunden ist und fähig ist, andererseits mit einem zweiten Eingang des Wechselrichters verbunden zu werden,
- einen zweiten positiven Ausgangsanschluss (BP2), der mit der internen Plusschiene (BPI) verbunden ist, und einen zweiten negativen Ausgangsanschluss (BN2), der mit der internen Minusschiene (BNI) verbunden ist, wobei der Kasten (B) ferner Folgendes umfasst:
- zwei Befestigungslaschen (PFP, PFN) für eine elektrische Verbindung, wobei die Laschen von der internen Plusschiene und der internen Minusschiene (BPI, BNI) isoliert sind,
- eine Sicherung (FUSP), bei der einer der elektrischen Anschlüsse an dem zweiten positiven Anschluss (BP2) befestigt ist und bei der der andere der elektrischen Anschlüsse an einer der Befestigungslaschen (PFP) befestigt ist,
- und eine andere Sicherung (FUSN), bei der einer der elektrischen Anschlüsse an dem zweiten negativen Anschluss (BP2) befestigt ist und bei der der andere der elektrischen Anschlüsse an der anderen der Befestigungslaschen (PFN) befestigt ist,
wobei das Gehäuse (C) versetzte Ausgangsanschlüsse umfasst, die den positiven und negativen Ausgangsanschlüssen (BP1, BP2, BP3, BN1, BN2, BN3) des Kastens (B) entsprechen, wobei der Kasten (B) eine positive Ausgangslasche (PP), die mit der internen Plusschiene (BPI) verbunden ist, und eine negative Ausgangslasche (PN), die mit der internen Minusschiene (BNI) verbunden ist, umfasst und wobei das dichte Gehäuse (C) zwei Öffnungen (OP, ON), die sich jeweils gegenüber der positiven Ausgangslasche (PP) bzw. der negativen Ausgangslasche (PN) befinden, sowie einen Schutzdeckel (COP) der Öffnungen (OP, ON) umfasst, wobei der Deckel (COP) mit einer Dichtung (J) versehen ist,
wobei die Öffnungen (OP, ON) für das Einführen eines Spannungsprüfers ausgelegt sind und wobei der Deckel (COP) eine dritte Öffnung (OI) schützt, die im Gehäuse (C) gegenüber einer elektrischen Sicherheitsvorrichtung (DS) ausgebildet ist.

2. Gehäuse (C) nach Anspruch 1, **dadurch gekennzeichnet, dass** die Sicherungen (FUSP, FUSN) mit den Anschlüssen (BP2, BN2) und den Laschen (PFP, PFN) durch ein Schraube-Mutter-System elektrisch verbunden sind.

3. Gehäuse (C) nach Anspruch 1 oder 2, **dadurch gekennzeichnet, dass** der Kasten (B) ferner einen dritten positiven Anschluss (BP3), der einerseits mit der internen Plusschiene (BPI) verbunden ist und fähig ist, andererseits mit einem ersten Eingang eines anderen Wechselrichters des Antriebsstrangs verbunden zu werden, und einen dritten negativen Anschluss (BN3), der einerseits mit der internen Minusschiene (BNI) verbunden ist und fähig ist, andererseits mit einem zweiten Eingang des anderen Wechselrichters verbunden zu werden, umfasst.

4. Gehäuse (C) nach einem der Ansprüche 1 bis 3, **dadurch gekennzeichnet, dass** die elektrische Sicherheitsvorrichtung (DS) fähig ist, beim Öffnen des Deckels (COP) eine schnelle Entladung des Glättungskondensators zu bewirken.

5. Gehäuse (C) nach einem der Ansprüche 1 bis 4, **dadurch gekennzeichnet, dass** der Versatz der positiven und negativen Ausgangsanschlüsse (BP1, BP2, BP3, BN1, BN2, BN3) des Kastens (B) im Bereich des Gehäuses (C) mit Hilfe von Sammelschienen (BB1, BB3) oder Kabeln erfolgt.

6. Gehäuse (C) nach einem der Ansprüche 1 bis 5, **dadurch gekennzeichnet, dass** das Gehäuse (C) einen Entladungswiderstand umfasst, der zwischen einem der positiven Ausgangsanschlüsse und einem der negativen Ausgangsanschlüsse des Kastens (B) verbunden ist.

7. Antriebsstrang, der ein Gehäuse (C) nach einem der Ansprüche 1 bis 6, eine Traktionsbatterie, eine elektrische Maschine und einen oder mehrere Wechselrichter umfasst, **dadurch gekennzeichnet, dass** die elektrischen Anschlüsse der Sicherungen (FUSP, FUSN), die an den Befestigungslaschen (PFP, PFN) befestigt sind, mit dem Hochspannungsnetz des Fahrzeugs, das den Antriebsstrang umfasst, elektrisch verbunden sind.

## Claims

1. Sealtight power electronics box (C) into which a housing (B) is inserted, said housing (B) incorporating a smoothing capacitor for an electric powertrain, said capacitor being positioned between an internal negative bus and an internal positive bus (BPI, BNI) to said housing (B), said housing (B) including:
- a first positive output terminal (BPI) that is connected to said positive internal bus (BPI) and capable of being connected to a first input of one inverter of said powertrain, and a first negative output terminal (BN1) that is connected to said negative internal bus (BNI) and capable of being connected to a second input of said inverter;
- a second positive output terminal (BP2) that is connected to said positive internal bus (BPI) and a second negative output terminal (BN2) that is connected to said negative internal bus (BNI), said housing (B) further comprising:
- two attachment lugs (PFP, PFN) for electrical connection, said lugs being insulated from said positive and negative internal buses (BPI, BNI);
- one fuse (FUSP), one of the electrical terminals of which is attached to said second positive terminal (BP2) and the other of the electrical terminals of which is attached to one of said attachment lugs (PFP) ;
- and another fuse (FUSN), one of the electrical terminals of which is attached to said second negative terminal (BN2) and the other of the electrical terminals of which is attached to the other of said attachment lugs (PFN),
said box (C) including displaced output terminals that correspond to said positive and negative output terminals (BP1, BP2, BP3, BN1, BN2, BN3) of said housing (B), said housing (B) including a positive output lug (PP) that is connected to said positive internal bus (BPI) and a negative output lug (PN) that is connected to said negative internal bus (BNI), and said sealtight box (C) including two apertures (OP, ON) that are located facing said positive (PP) and negative (PN) output lugs, respectively, and a protective cover (COP) for said apertures (OP, ON), said cover (COP) being provided with a seal (J), said apertures (OP, ON) being suitable for the insertion of a probe for checking the absence of voltage, and said cover (COP) protecting a third aperture (OI) made in said box (C) facing an electrical safety device (DS).

2. Box (C) according to Claim 1, **characterized in that** said fuses (FUSP, FUSN) are connected electrically to said terminals (BP2, BN2) and said lugs (PFP, PFN) by a screw-and-nut system.

3. Box (C) according to Claim 1 or 2, **characterized in that** said housing (B) further includes a third positive terminal (BP3) that is connected to said positive internal bus (BPI) and capable of being connected to a first input of another inverter of said powertrain, and a third negative terminal (BN3) that is connected to said negative internal bus (BNI) and capable of being connected to a second input of said other inverter.

4. Box (C) according to any one of Claims 1 to 3, **characterized in that** said electrical safety device (DS) is capable of causing the rapid discharge of said smoothing capacitor upon the opening of said cover (COP).

5. Box (C) according to any one of Claims 1 to 4, **characterized in that** the displacement of said positive and negative output terminals (BP1, BP2, BP3, BN1, BN2, BN3) from said housing (B) to said box (C) is achieved by means of busbars (BB1, BB3) or wires.

6. Box (C) according to any one of Claims 1 to 5, **characterized in that** said box (C) includes a discharge resistor connected between one of said positive output terminals and one of said negative output terminals of said housing (B).

7. Powertrain including a box (C) according to any one of Claims 1 to 6, a traction battery, an electric machine and one or more inverters, **characterized in that** said electrical terminals of said fuses (FUSP, FUSN), which are attached to said attachment lugs (PFP, PFN), are electrically connected to the high-voltage network of the vehicle including said powertrain.
